(19) Europäisches Patentamt / European Patent Office / Office européen des brevets

(11) **EP 3 115 963 A1**

(12) **EUROPEAN PATENT APPLICATION**

(43) Date of publication:
**11.01.2017 Bulletin 2017/02**

(51) Int Cl.:
***G06T 1/00*** (2006.01)

(21) Application number: **15306143.7**

(22) Date of filing: **10.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• SHEIKH FARIDUL, Hasan
  35576 Cesson-Sévigné (FR)
• DOERR, Gwenaël
  35576 Cesson-Sévigné (FR)
• BAUDRY, Séverine
  35576 Cesson-Sévigné (FR)

(74) Representative: **Huchet, Anne**
**TECHNICOLOR**
**1-5, rue Jeanne d'Arc**
**92130 Issy-les-Moulineaux (FR)**

(54) **METHOD FOR GENERATING A PAIR OF DISPARITY-COHERENT WATERMARKS**

(57)     A method for generating a pair of disparity coherent left and right watermarks for a 3D video pair of left and right views is disclosed. The method computing a central depth map associated to a central view located in the middle of left and right views; and obtaining a pair of disparity coherent left and right watermarks by warping a reference watermark from the central view to the left and right views using the central depth map.

A method for watermarking a pair of left and right views using the generated disparity coherent watermark, and devices implementing the disclosed methods are further described.

Fig 1

## Description

Technical domain

The present principles relate to video watermarking, in particular for tridimensional (3D) stereo video. More particularly, the present principles relate to a method for generating a pair of disparity coherent watermarks, a method for watermarking a pair of views of 3D stereo video, and associated devices implementing the methods.

Background

This section is intended to introduce the reader to various aspects of the art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

In 3D stereo video, both a right and a left view are displayed so that the user experiences a 3D effect. These left and right views are either obtained using a stereo camera capture rig or, alternately, the left and right views are synthesized from a reference view. In line with conventional video, copyright protection against piracy remains a major demand of content owners for 3D and multi-view video. Among the collection of technical protection measures, digital watermarking offers a deterrence mechanism to combat piracy. Digital watermarking consists in imperceptibly altering content to encode information, for instance, a user or device identifier. This information can be recovered from pirate videos, even if they have been subsequently processed after the watermarking operation, thereby offering forensic means to trace back the source of an unauthorized copy. Today, two main categories of watermarking systems have been proposed for 3D stereo videos.

A first category involves the definition of a depth-invariant embedding domain for watermarking. Once the two views of a stereo video have been rectified (in the event the cameras were not perfectly parallel), pixels corresponding to the same physical point in the scene only shift horizontally lines between the left and right views, the amplitude of the shift being inversely proportional the depth of the physical point. To be oblivious to such depth-dependent displacements, a strategy consists in defining a domain invariant to horizontal shifts (for instance the average along the rows of the luminance value of the pixels) and to embed the watermark in this domain. Such a method is disclosed in a European patent application EP 2 426 636 A1 published March 7th 2012 by the same applicant. The representation in this invariant domain of the left and right views, as well as views synthesized in between, is particularly stable and well-established watermarking know-how can be readily reused. On the other hand, the inverse mapping from this invariant domain back to a view is known to introduce horizontal visual artifacts that negatively impact the visualization experience of the end user.

A second category of watermarking proposals for 3D stereo video rely on the notion of disparity-coherence between the watermark signals embedded in the left and right views. In essence, it amounts to guarantee that pixels corresponding to the same physical point in the scene always carry the same watermark sample. It is somewhat equivalent to simulating a 3D scene that would be physically watermarked and that would have been captured on camera. As a result, this strategy visually yields a rather natural effect: the watermark noise texture seems to be overlaid onto the surface of the objects in the scene. Subjective perceptual studies clearly indicate improved visual comfort for such disparity-coherent watermarks compared to other strategies.

A first known technique to produce such disparity-coherent watermarks is to leverage on a particular representation of 3D stereo video content, namely depth-image-based rendering (DIBR). In this context, the video is represented by a central 2D view and a corresponding depth map that associates, to each pixel of the view, the depth value of the corresponding physical point in the scene. Afterwards, using view synthesis, it is possible to generate the left and right views. In "Watermarking for depth-image-based rendering" (in Proceedings of the "IEEE International Conference on Image Processing", pages 4217-4220, November 2009), E. Halici and A. Alatan disclose a method for embedding a watermark in the central view. Using the available depth information, it is then possible to synthesize left and right views that naturally inherit disparity coherent watermarks. Such a strategy makes the watermark detection a bit more challenging due to desynchronization issues but follow-up research has disclosed potential workarounds to avoid such shortcomings. However, the main issue is that DIBR is not yet deployed today. 3D stereo video content is still routinely represented as a pair of 2D views. That is to say that depth information is not readily available, making such DIBR watermarking solutions not applicable immediately.

Another known technique therefore consists in exploiting the geometry of a plurality of cameras to transport a reference watermark from one reference view to another one in a disparity-coherent way prior to embedding it. For instance, in "Watermarking of free-view video" (in the "IEEE Transactions on Image Processing" volume 19, issue 7, pages 1785-1797, July 2010), A. Koz, C. Cigla and A. Alatan disclose a method for embedding a watermark into multiple views of the same scene using some ray tracing mechanism and assuming that depth information and camera parameters are available. To lift such assumption, subsequent works have suggested relying on standard depth estimation tools to gain access to the depth information from the left and right views only. For instance, a reference watermark is first embedded in the left view, then warped to the right using the estimated depth information, and finally embedded in the right view. This known technique however comes with a number of limitations, including the fact that the watermark energy captured by the detector is not evenly distributed across the two views. In "Disparity Estimation and Disparity Coherent Watermarking" (in "Media Watermarking, Security and Forensics XVII", Proceedings of SPIE 9409, pages 940900, February 2015), the applicants explained that there exists a bias towards the view hosting the reference non-warped watermark, which showcases superior watermark detection power. This bias is essentially due to two factors:

1. the warping process inherently creates holes in the watermark pattern, e.g. in (dis)occlusion areas and borders, and thereby reduces the intrinsic watermark energy inserted in the right view;

2. the warping process relies on a single depth estimation, e.g. using the disparity from the left to the right, whereas view synthesis makes use of two depth estimation (left-to-right and right-to-left). Slight inconsistencies between the two estimations then result in a loss of watermark detection power in intermediary views.

Such degradation of the detection scores then need to be compensated for by lowering for instance the detection threshold and thus make false positive detections more likely.

New techniques to generate pairs of disparity-coherent watermarks in a 3D stereo video composed of two views captured by left and right cameras are therefore desirable. In particular, these techniques should avoid any imbalance between the left and right views with respect to watermark detection power.

Summary

The purpose of the present principles is to overcome at least one of the disadvantages of the prior art by proposing a method for generating a pair of disparity-coherent watermarks to embed in a stereo video having at least a pair of left and right views. The present principles disclose a technique for emulating the DIBR watermarking paradigm, i.e. warping a watermark pattern from a virtual central view to the left and right views, when the depth information is not provided i.e. only the left and right views are available. The present principles leverage on two depth maps estimated for the left and right views in order to achieve more robustness to virtual view synthesis. Advantageously, the present principles yield superior watermark detection score statistics in any view synthesized in-between the left and right views and, in particular, in the central view located in the middle of left and right views. Such improved detection statistics grant the ability to raise the detection threshold and thus lower the likelihood of false positives.

To this end, a method for generating a pair of disparity coherent left and right watermarks for a 3D video pair of left and right views is disclosed and comprises:

- Computing a central depth map associated to a central view located in the middle of left and right views;
- Obtaining a pair of disparity coherent left and right watermarks by warping a reference watermark from the central view to the left and right views using the central depth map.

According to a first variant, computing a central depth map comprises:

- Obtaining a left depth map using the left camera parameters and a disparity map from left view to right view ; obtaining a right depth map using the right camera parameters and a disparity map from right view to left view ;
- Obtaining a central depth map from left by warping the left depth map using the left depth map from the left view to the central view; Obtaining a central depth map from right by warping the right depth map using the right depth map from the right view to the central view;
- Merging the central depth map from left and a central depth map from right to obtain the central depth map.

According to a second variant, computing a central depth map comprises:

- Obtaining a left depth map using the left camera parameters and a disparity map from the left view to the right view ; obtaining a right depth map using the right camera parameters and a disparity map from the right view to the left view ;
- Obtaining a central view using left and right views, left and right depth maps;
- Obtaining a central depth map from left using the left camera parameters and a disparity map from the left view to the central view; Obtaining a central depth map from right using the right camera parameters and a disparity map from the right view to the central view;
- Merging the central depth map from left and a central depth map from right to obtain the central depth map.

In a first preferred embodiment, the method further comprises:

- Obtaining a left depth map using the left camera parameters and a disparity map from left view to right view ; obtaining a right depth map using the right camera parameters and a disparity map from right view to left view;
- Obtaining a central depth map from left by warping left depth map using the left depth map from left view to central view; Obtaining a central depth map from right by warping the right depth map using the right depth map from right view to central view;

and the disparity-coherent left watermark is obtained by warping the reference watermark using the central depth map from left from the central view to the left view; the disparity coherent right watermark is obtained by warping the reference watermark using the central depth map from right from the central view to the right view.

According to particular characteristics:

- the reference watermark has a larger width than left and right views;
- the reference watermark is pseudo-randomly generated using a secret key according to a Gaussian distribution.

In a second preferred embodiment, a method for watermarking a 3D video pair of left and right views is disclosed, the method comprises embedding a disparity coherent left watermark in a left view; and embedding a disparity coherent right watermark in a right view where the pair of disparity coherent left and right watermarks is generated according to the previously described method.

In a second aspect, a computer program product comprising program code instructions to execute the steps of the disparity coherent generating method or of the watermarking method when this program is executed on a computer is disclosed.

In a third aspect, a processor readable medium is disclosed that has stored therein instructions for causing a processor to perform any of the methods described in the present principles.

In a fourth aspect, a non-transitory program storage device is disclosed that is readable by a computer, tangibly embodies a program of instructions executable by the computer to perform any of the described methods.

In a fifth aspect, a device comprising at least one processor configured to perform any of the disclosed methods is disclosed.

In a variant, the device comprises means for computing a central depth map associated to a central view located in the middle of left and right views; and means for obtaining a pair of disparity coherent left and right watermarks by warping a reference watermark from the central view to the left and right views using the central depth map. In a variant, the device comprises further means for embedding the generated disparity coherent watermarks.

While not explicitly described, the present embodiments may be employed in any combination or subcombination. For example, embedding features may be combined with disparity coherent generating feature. Besides, any characteristic or variant described for the methods is compatible with a device intended to process the disclosed methods and with a computer-readable storage medium storing program instructions.

Brief description of the drawings

Other characteristics and advantages of the present principles will appear through the description of non-limiting embodiments, which will be illustrated, with the help of the enclosed drawings.

- **Figure 1** represents a method for generating and embedding a disparity coherent watermark according to a particular embodiment,
- **Figure 2** represents a method for computing a central depth map according to a particular embodiment,
- **Figure 3** represents a method for computing a central depth map according to another particular embodiment,
- **Figure 4** represents a method for generating a disparity coherent watermark according to another particular embodiment,
- **Figure 5** represents the impact of extending the dimensions of the reference watermark pattern to fully cover the original views after warping,
- **Figure 6** represents the improved watermark detection statistics using the present principles,
- **Figure 7** illustrates a device that may be used to implement all the methods of the present principles.

Detailed description of preferred embodiments

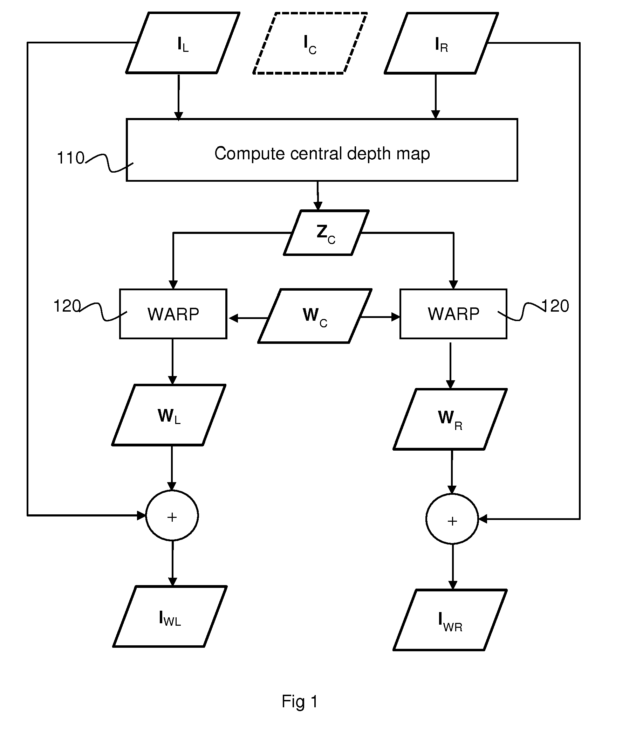

**Figure 1** represents a method for generating and embedding a pair of disparity-coherent watermarks according to a particular embodiment. In the following description, a video comprises a temporal set of frames representative of a content. Moreover, in case of 3D stereo video, the term "frame" refers to a "view" either left or right. The method is thus defined for a pair of left and right views belonging to the 3D stereo video. Advantageously the method is sequentially repeated for each pair of views to watermark the whole 3D stereo video.

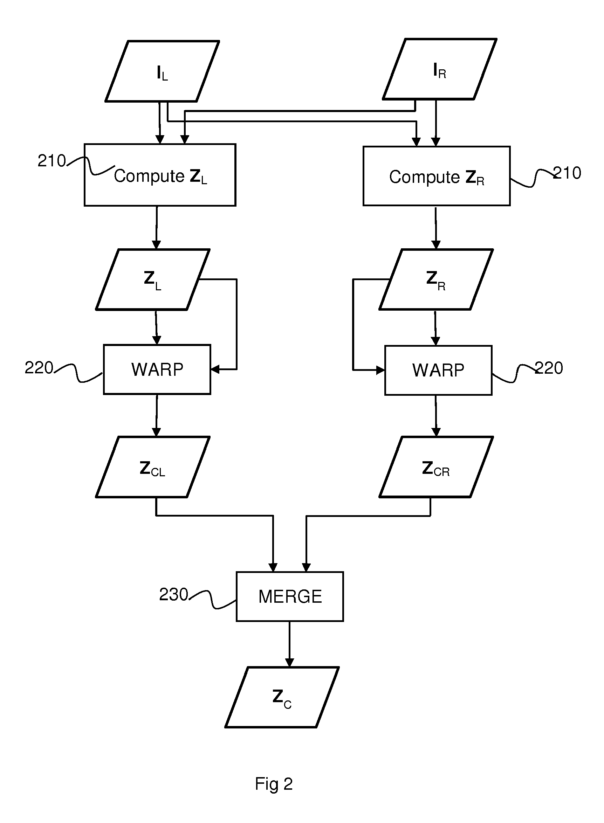

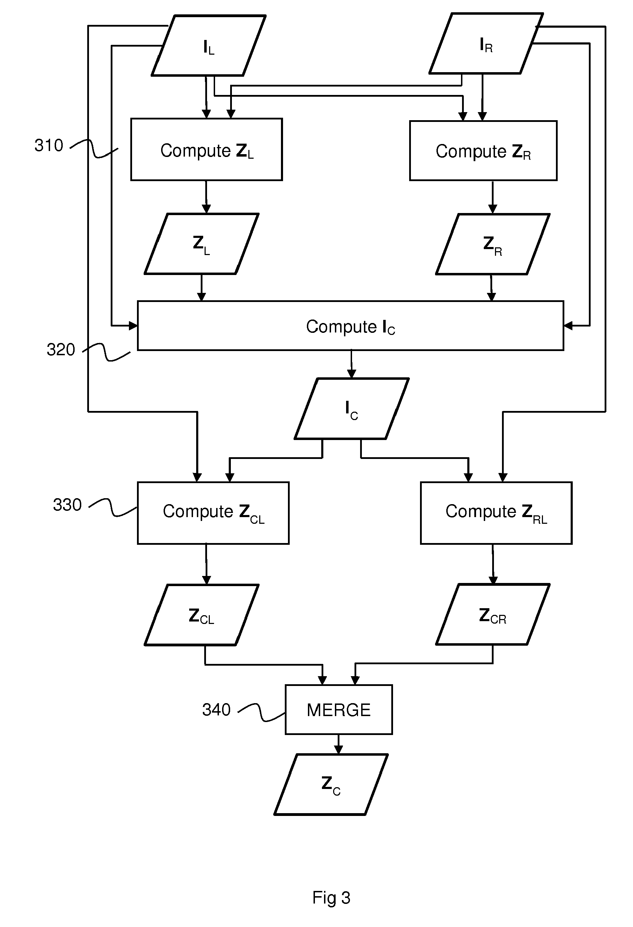

In a first step 110, a central depth map $\mathbf{Z}_c$ is computed. Such central depth map $\mathbf{Z}_c$ is associated to a central view $\mathbf{I}_c$ located in the middle of the left and right views, $\mathbf{I}_L$ and $\mathbf{I}_R$. In the present principles, such a central view $\mathbf{I_c}$ is virtual since it is not available in input of the method. Two variants of this step 110 are described hereafter with respect to figure 2 and figure 3.

In a second step 120, a disparity coherent watermark, comprising a left watermark $\mathbf{W}_L$ and a right watermark $\mathbf{W}_R$, is obtained. The left watermark $\mathbf{W}_L$, respectively the right watermark $\mathbf{W}_R$, is obtained by warping 120 a reference watermark $\mathbf{W}_c$ from the central view to the left view, respectively to the right view, using the central depth map $\mathbf{Z}_c$. In practice, this warping operation can be done by using a generic functions built-in view synthesis software such as MPEG View Synthesis Reference Software (VSRS) that transforms an input image $\mathbf{I}_{in}$ to an output image Iout using depth information $\mathbf{Z}_{in}$ from an

input view to an output view:

$$\mathbf{I}_{out} = \mathrm{WARP}(\mathbf{I}_{in}, \mathbf{Z}_{in}, \mathbf{\Theta}_{in}, \mathbf{\Theta}_{out}),$$

where $\theta_{in}$ and $\theta_{out}$ are the camera parameters associated to the input and output views respectively, routinely represented using a 3x4 standardized matrix. If they are not readily available, the parameters $\theta_L$ and $\theta_R$ for the left and right views can be estimated using standard computer vision techniques. Assuming that the left and right cameras share the same intrinsic parameters (focal length, image sensor format and principal point) and have the same orientation (no rotation), the central camera parameters $\theta_c$ also have this characteristics and is placed half way in-between the left and right camera positions.

Then, in an optional additional step, the pair of disparity coherent-watermarks is embedded in the pair of left and right views by adding the left watermark $\mathbf{W}_L$ to the left view $\mathbf{I}_L$ to obtain a left watermark image $\mathbf{I}_{WL}$, and by adding the right watermark $\mathbf{W}_R$ to the right view $\mathbf{I}_R$ to obtain a right watermark image $\mathbf{I}_{WR}$. Such watermark addition is well known by the skilled in the art, for instance using spread-spectrum watermarking, and may incorporate content-dependent perceptual shaping that locally adjusts the power of the watermark to improve its imperceptibility. As the skilled in the art knows generating and embedding can be done separately, even though figure 1 shows and describes them together. In practical systems, most watermarks are pre-processed and just embedded at the time of watermarking. Accordingly figure 1 also illustrated a method for watermarking a 3D video pair of left and right views, the method comprising embedding a disparity coherent right watermark in a right view where the pair of disparity coherent left and right watermarks is generated according to the previously described method.

**Figure 2** represents a method for computing the central depth map $\mathbf{Z}_c$ of the step 110 according to a particular embodiment. In 3D stereo video processing, the disparity of a pixel associated to a physical point of the scene is defined as the offset of the locations of the pixels corresponding to this physical point in two views. It is also common practice to assume that the left and right camera share the same intrinsic parameters as well as the same orientation. Should it be not the case, the pair of views would be rectified prior to any subsequent processing. In this simplified setup, the relationship between the disparity d and the depth z is then simplified to the following identity:

$$z = \frac{f \cdot t}{d}$$

where $f$ is the focal length of the camera and $t$ the inter-camera distance. The computation of the disparity between two views is well known from the skilled in the art and is out of scope of the present principles. Typical solutions, such as MPEG Disparity Estimation Reference Software (DERS) or the method disclosed by Walter Drazic et Neus Sabater. in "A Precise Real-time Stereo Algorithm" (Proceedings of the 27th Conference on Image and Vision Computing New Zealand, pages 138-143, November 2012), usually involve computing an optical flow to match the pixels of the two views and imposing regularization constraints to cope with noise. The resulting disparity map $\mathbf{D}$ can then be converted to a depth map using the camera parameters $\theta$ of the cameras associated to the views.

However, in practice, the central view $\mathbf{I}_c$ that would be required to compute the intended central depth map $\mathbf{Z}_c$ is not available. In a first step 210 of this particular embodiment, a left and right depth maps $\mathbf{Z}_L$ and $\mathbf{Z}_R$ are computed using the two input views $\mathbf{I}_L$ and $\mathbf{I}_R$ as well as their camera parameters. To be more specific, the left depth map $\mathbf{Z}_L$ (respectively the right depth map $\mathbf{Z}_R$) is derived from the left-to-right disparity map $\mathbf{D}_{L2R}$ (respectively from the right-to-left disparity map $\mathbf{D}_{R2L}$).

In a second step 220, the left and right depth map are warped to the central view in order to obtain two individual estimates $\mathbf{Z}_{CL}$ and $\mathbf{Z}_{CR}$ of the central depth map, one obtained from the left and the other from the right:

$$\mathbf{Z}_{CL} = \mathrm{WARP}(\mathbf{Z}_L, \mathbf{Z}_L, \mathbf{\Theta}_L, \mathbf{\Theta}_C),$$

$$\mathbf{Z}_{CR} = \mathrm{WARP}(\mathbf{Z}_R, \mathbf{Z}_R, \mathbf{\Theta}_R, \mathbf{\Theta}_C).$$

A particularly salient aspect of this embodiment is that the depth map is considered both as an image to be warped and as depth information guiding the warping process. In an optional variant, these estimates of the central depth map $\mathbf{Z}_{CL}$ and $\mathbf{Z}_{CR}$ are further processed to fill holes e.g. by an inpainting process. Such techniques are well known by the skilled in the art and are not part of these disclosed principles.

In a final step 230, the two estimates of the central depth map $\mathbf{Z}_{CL}$ and $\mathbf{Z}_{CR}$ are merged to obtain the central depth map $\mathbf{Z}_C$. A baseline embodiment computes for instance the average of $\mathbf{Z}_{CL}$ and $\mathbf{Z}_{CR}$ for pixels having a depth value in both estimates and keeping the valid depth value for pixels missing a depth value in $\mathbf{Z}_{CL}$ or $\mathbf{Z}_{CR}$, for instance due to holes in occlusion areas. In a variant, the average is weighted (i) using information provided by the depth estimation tools such as the confidence of the returned depth value and/or (ii) using some measure of the inconsistency between the left-to-right and right-to-left disparity estimations. Advantageously, such weighting allows reducing the influence of noisy components in the two estimates of the central depth

map $\mathbf{Z}_{CL}$ and $\mathbf{Z}_{CR}$.

**Figure 3** represents a method for computing the central depth map $\mathbf{Z}_c$ of the step 110 according to another embodiment. Instead of warping the left and right depth map $\mathbf{Z}_L$ and $\mathbf{Z}_R$, this embodiment rather computes a central view $\mathbf{I}_c$ and then the two estimates $\mathbf{Z}_{CL}$ and $\mathbf{Z}_{CR}$ of the central depth map using it.

In a first step 310, as in the previous embodiment, a left and right depth maps $\mathbf{Z}_L$ and $\mathbf{Z}_R$ are computed using the two input views $\mathbf{I}_L$ and $\mathbf{I}_R$ as well as their camera parameters.

In a second step 320, a central view $\mathbf{I}_c$ is computed using the two input views $\mathbf{I}_L$ and $\mathbf{I}_R$, the two associated depth maps $\mathbf{Z}_L$ and $\mathbf{Z}_R$, as well as relevant camera parameters. Virtual view synthesis is well known by the skilled in the art and can be performed using widely available software such as MPEG View Synthesis Reference Software (VSRS). Such tools typically warps the left and right views to the position of the view to be synthesized, in our case:

$$\mathbf{I}_{CL} = \text{WARP}(\mathbf{I}_L, \mathbf{Z}_L, \Theta_L, \Theta_C),$$

$$\mathbf{I}_{CR} = \text{WARP}(\mathbf{I}_R, \mathbf{Z}_R, \Theta_R, \Theta_C),$$

before combining these two interim views to obtain the central view $\mathbf{I}_c$.

In a third step 330, two estimates of the central depth map are obtained: one $\mathbf{Z}_{CL}$ using the estimated disparity $\mathbf{D}_{C2L}$ from the central to the left view, and the other $\mathbf{Z}_{CR}$ using the estimated disparity $\mathbf{D}_{C2R}$ from the central to the right view. Advantageously, this process can be performed using standard depth estimation tools fed with appropriate parameters.

In a final step 340, the two estimates of the central depth map $\mathbf{Z}_{CL}$ and $\mathbf{Z}_{CR}$ are merged to obtain the central depth map $\mathbf{Z}_C$. in a manner similar to the previous embodiment.

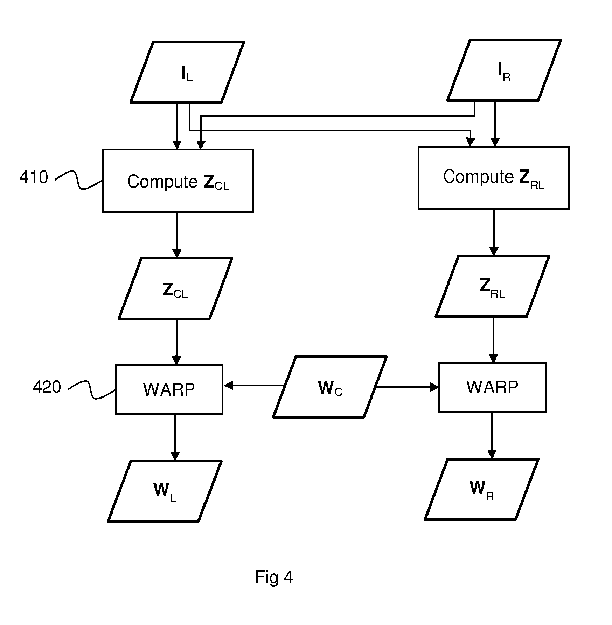

**Figure 4** represents a method for generating a disparity coherent watermark according to another particular embodiment. A salient aspect of this embodiment is that the two estimated central depth maps $\mathbf{Z}_{CL}$ and $\mathbf{Z}_{CR}$ are kept to warp the reference watermark $\mathbf{W}_C$ rather than merging them into a single central depth map $\mathbf{Z}_c$. Advantageously, this strategy better copes with inconsistencies present in the $\mathbf{D}_{L2R}$ and $\mathbf{D}_{R2L}$ disparity maps and thus provides better watermark detection statistics.

In a first step 410, two individual estimates of the central depth map $\mathbf{Z}_{CL}$ and $\mathbf{Z}_{CR}$ are obtained using the left and right views $\mathbf{I}_L$ and $\mathbf{I}_R$ and associated camera parameters, as disclosed in either Figure 2 or Figure 3.

In a step not represented in Figure 4, a central reference watermark $\mathbf{W}_C$ is generated using a secret key K. This process is well-known by the skilled in the art and can be done for instance by seeding a pseudo-random generator with the secret key $K$ in order to generate the 2D watermark array containing samples than are normally distributed with zero mean and unit norm.

In a second step 420, the central reference watermark $\mathbf{W}_C$ is warped to the left and the right using the two estimates of the central depth map $\mathbf{Z}_{CL}$ and $\mathbf{Z}_{CR}$ to obtain the pair of left and right disparity-coherent watermarks $\mathbf{W}_L$ and $\mathbf{W}_R$:

$$\mathbf{W}_L = \text{WARP}(\mathbf{W}_C, \mathbf{Z}_{CL}, \Theta_C, \Theta_L),$$

$$\mathbf{W}_R = \text{WARP}(\mathbf{W}_C, \mathbf{Z}_{CR}, \Theta_C, \Theta_R).$$

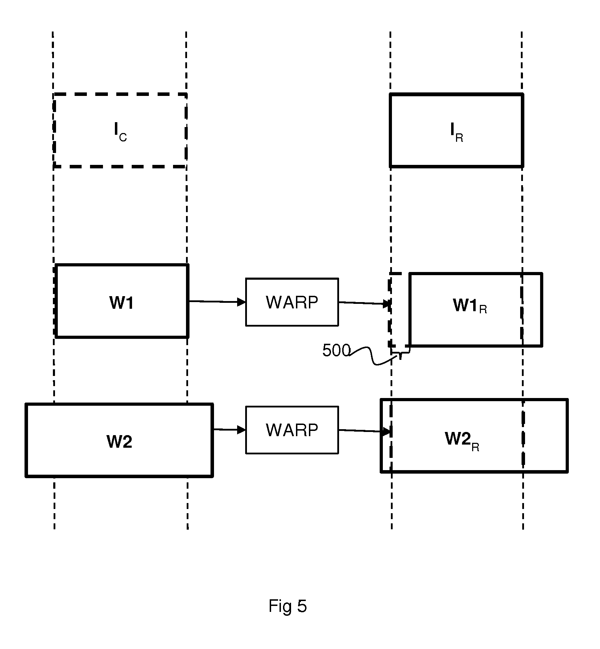

Advantageously, the central watermark pattern $\mathbf{W}_C$ is generated to have dimensions that exceeds the ones of the input views $\mathbf{I}_L$ and $\mathbf{I}_R$. As illustrated in **Figure 5** for the right view, if the watermark $\mathbf{W}_C$ has the same dimensions as the right view $\mathbf{I}_R$, it will not fully cover the original view after warping the pattern $\mathbf{W}_C$ from the central camera position to the right camera position due to the fact that the right border 500 of the right view cannot be seen in the central view. By adequately extending the dimensions of the watermark, as well as the central depth maps $\mathbf{Z}_{CL}$ and $\mathbf{Z}_{CR}$, it is possible to have the watermark pattern covering the whole view after the warping process. In practice, such extended watermarks exceed the dimensions of the original views after warping and need to be cropped after the warping operation to match the dimensions of the view prior to subsequent processing. This variant notably contributes to preserving and balancing watermark detection statistics in any view synthesized between the left and right views.

In a final embedding step not represented on Figure 4, the pair of watermarked views $\mathbf{I}_{WL}$ and $\mathbf{I}_{WR}$ are obtained by adding the warped watermarks $\mathbf{W}_L$ and $\mathbf{W}_R$, to the original views $\mathbf{I}_L$ and $\mathbf{I}_R$, e.g.:

$$\mathbf{I}_{LW} = \mathbf{I}_L + \alpha . \mathbf{W}_L$$

$$\mathbf{I}_{RW} = \mathbf{I}_R + \alpha . \mathbf{W}_R$$

where $\alpha > 0$ is the watermark embedding strength. For the sake of simplicity, we used an additive spread-spectrum embedding rule but the present principles remain compatible with other watermark embedding embodiments such as, in non-limiting example, multiplicative embedding. In a variant, the watermark is perceptually shaped by modulating the embedding strength according to local characteristics of the view e.g. amplifying the watermark in textured areas, attenuating the watermark in areas with low confidence for the disparity estimation, etc.

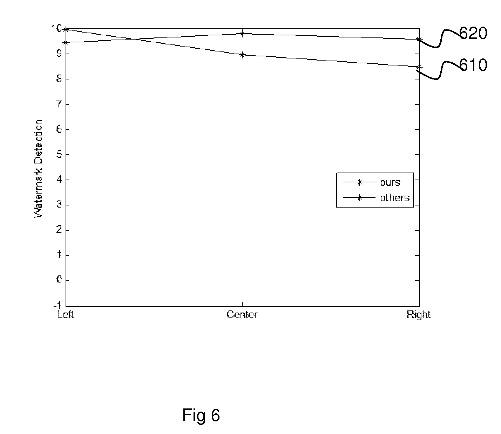

At detection, any technique adapted for coherent watermark is compatible with the present principles. For instance, the technique disclosed the European patent application EP 2 835 783 A1 published on February 11th 2015 is used. A sample experimental result is shown in **Figure 6** that compares the average watermark detection score for the left, right and central views using the classical approach compared to the proposed one. Classical disparity-coherent watermark embedding (left watermark pattern warped to right) clearly showcases a bias toward the left view. Watermark detection statistics 610 increase as the camera gets closer to the left view. In contrast, the watermark detection statistics 620 corresponding to the proposed principles exhibit a similar behavior for all views and, in particular, raises the value of the minimal detection score recorded over all views.

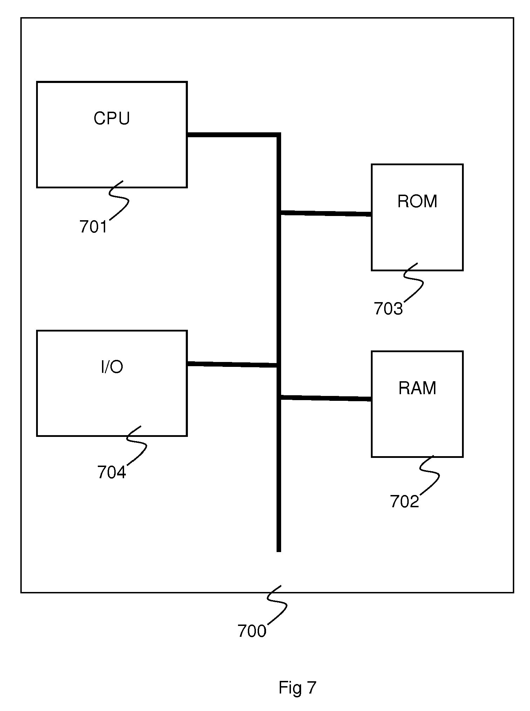

**Figure 7** illustrates a hardware embodiment of a device 700 that may be used to implement all the methods of the present principles. The skilled person will also appreciate that all the methods can be implemented by devices such as PCs. The device 700 corresponds, for example, to a personal computer, a laptop, a game console or any image processing unit. According to different variants, the features described for the methods are being implemented in software module or in hardware module. The device 700 comprises physical means intended to implement an embodiment of one of the methods, for instance a processor 701 (CPU), a data memory 702 (RAM or HDD), a program memory 703 (ROM), one of several inputs/outputs 704 (I/O). When powered up, the microprocessor 701 loads and runs the instructions of any of the methods comprised in RAM 702. The memory RAM 702 further comprises data representative of the video sequence and associated reference watermark.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

Naturally, the present principles are not limited to the embodiments and characteristics previously described.

In particular, the present principles are compatible with any watermarking scheme or 3D watermark detection method. Besides, the present principles also relate to a method for detecting a disparity coherent watermark in a 3D video where the pair of disparity coherent left and right watermarks embedded in a pair of left and right views of the 3D video is generated according to the previously described method.

**Claims**

1.   Method for generating a pair of disparity coherent left and right watermarks for a 3D video pair of left and right views ($I_L$, $I_R$), the method being **characterized in that** it comprises :

   • Computing (110) a central depth map ($Z_C$) associated to a central view located in the middle of said left and right views;
   • Obtaining said pair of disparity coherent left and right watermarks ($W_L$, $W_R$) by warping (120) a reference watermark ($W_C$) from said central view to the left and right views using said central depth map ($Z_C$).

2.   Method according to claim 1 wherein said left view is associated with left camera parameters and said right view is associated with right camera parameters and wherein computing said central depth map further comprises :

   • Obtaining (210, 310, 410) a left depth map ($Z_L$) using the left camera parameters and a disparity map from said left view ($I_L$) to said right view ($I_R$); obtaining (210, 310, 410) a right depth map ($Z_R$) using the right camera parameters and a disparity map from said right view ($I_R$) to said left view ($I_L$);
   • Obtaining (220, 330, 410) a central depth map from left ($Z_{CL}$) by warping said left depth map ($Z_L$) using said left depth map ($Z_L$) from said left view ($I_L$) to said central view; Obtaining (220, 330, 410) a central depth map from right ($Z_{CR}$) by warping said right depth map ($Z_R$) using said right depth map ($Z_R$) from said right view ($I_R$) to said central view;
   and wherein said disparity-coherent left watermark ($W_L$) is obtained by warping (420) said reference watermark ($W_C$) using said central depth map from left ($Z_{CL}$) from said central view to said left view ($I_L$); said disparity coherent right ($W_R$) watermark is obtained by warping (420) said reference watermark ($W_C$) using said central depth map from right ($Z_{CR}$) from said central view to said right view ($I_R$).

3.   Method according to any of claims 1 to 2 wherein the reference watermark ($W_C$) has a larger width than said left and right views ($I_L$, $I_R$).

4.   Method according to any of claims 1 to 3 wherein the reference watermark ($W_C$) is pseudo-randomly generated using a secret key according to a Gaussian distribution.

5.   Method for watermarking a 3D video pair of left and right views ($I_L$, $I_R$), the method comprising embedding (+) a disparity coherent left watermark ($W_L$) in said left view ($I_L$); and embedding a disparity coherent right watermark ($W_R$) in said right view ($I_R$) **characterized in that** said pair of disparity coherent left and right watermark ($W_L$, $W_R$) are generated according to any of claims 1 to 4.

6. Computer-readable storage medium storing program instructions computer-executable to perform the method of any of claims 1 to 4.

7. Device (700) for watermarking a 3D video pair of left and right views, the device comprising at least one processor (701) configured to :

   • Compute a central depth map ($Z_C$) associated to a central view located in the middle of said left and right views;
   • Obtain said pair of disparity coherent left and right watermarks ($W_L$, $W_R$) by warping a reference watermark ($W_C$) from said central view to the left and right views using said central depth map ($Z_C$)
   • embed said disparity coherent left watermark ($W_L$) in said left view ($I_L$); and embed said disparity coherent right watermark ($W_R$) in said right view ($I_R$).

8. Device (700) according to claim 7 wherein said left view is associated with left camera parameters and said right view is associated with right camera parameters and wherein the at least one processor (701) is configured to:

   • Obtain a left depth map ($Z_L$) using the left camera parameters and a disparity map from said left view ($I_L$) to said right view ($I_R$); obtain a right depth map ($Z_R$) using the right camera parameters and a disparity map from said right view ($I_R$) to said left view ($I_L$);
   • Obtain a central depth map from left ($Z_{CL}$) by warping said left depth map ($Z_L$) using said left depth map ($Z_L$) from said left view ($I_L$) to said central view; Obtain a central depth map from right ($Z_{CR}$) by warping said right depth map ($Z_R$) using said right depth map ($Z_R$) from said right view ($I_R$) to said central view;
   and wherein said disparity-coherent left watermark ($W_L$) is obtained by warping (420) said reference watermark ($W_C$) using said central depth map from left ($Z_{CL}$) from said central view to said left view ($I_L$); said disparity coherent right ($W_R$) watermark is obtained by warping (420) said reference watermark ($W_C$) using said central depth map from right ($Z_{CR}$) from said central view to said right view ($I_R$).

9. Device (700) according to any of claims 7 to 8 wherein the reference watermark ($W_C$) has a larger width than said left and right views ($I_L$, $I_R$).

10. Device (700) according to any of claims 7 to 8 wherein the at least one processor (701) is configured to pseudo-randomly generate the reference watermark ($W_C$) using a secret key according to a Gaussian distribution.

11. Device (700) for watermarking a pair of left and right views, the device comprising:

   • Means for computing a central depth map ($Z_C$) associated to a central view located in the middle of said left and right views;
   • Means for obtaining said pair of disparity coherent left and right watermarks ($W_L$, $W_R$) by warping a reference watermark ($W_C$) from said central view to the left and right views using said central depth map ($Z_C$);
   • Means for embedding said disparity coherent left watermark ($W_L$) in said left view ($I_L$); and means for embedding said disparity coherent right watermark ($W_R$) in said right view ($I_R$).

Fig 1

Fig 2

Fig 3

$I_L$

$I_R$

410

Compute $Z_{CL}$

Compute $Z_{RL}$

$Z_{CL}$

$Z_{RL}$

420

WARP

$W_C$

WARP

$W_L$

$W_R$

Fig 4

Fig 5

Fig 6

Fig 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EREN HALICI ET AL: "Watermarking for depth-image-based rendering", IMAGE PROCESSING (ICIP), 2009 16TH IEEE INTERNATIONAL CONFERENCE ON, IEEE, PISCATAWAY, NJ, USA, 7 November 2009 (2009-11-07), pages 4217-4220, XP031628244, ISBN: 978-1-4244-5653-6 * abstract * * page 4217, paragraph 3 - page 4218, paragraph 3.1 * | 1,3-7, 9-11 | INV. G06T1/00 |
| A | YU-HSUN LIN ET AL: "A Digital Blind Watermarking for Depth-Image-Based Rendering 3D Images", IEEE TRANSACTIONS ON BROADCASTING, IEEE SERVICE CENTER, PISCATAWAY, NJ, US, vol. 57, no. 2, 1 June 2011 (2011-06-01), pages 602-611, XP011323547, ISSN: 0018-9316, DOI: 10.1109/TBC.2011.2131470 * abstract * * page 603, paragraph II.A - page 605, paragraph III.A * | 1-11 | |
| A | CÉSAR BURINI ET AL: "Blind detection for disparity-coherent stereo video watermarking", PROCEEDINGS OF SPIE, vol. 9028, 19 February 2014 (2014-02-19), pages 90280B-1, XP055237665, US ISSN: 0277-786X, DOI: 10.1117/12.2037349 ISBN: 978-1-62841-730-2 * abstract * * page 2, paragraph 2.1 - page 4 * | 1-11 | |

TECHNICAL FIELDS
SEARCHED (IPC)

G06T

-----

-----

-----

-/--

The present search report has been drawn up for all claims

| Place of search | Date of completion of the search | Examiner |
|---|---|---|
| Munich | 11 January 2016 | Zamuner, Umberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 15 30 6143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALJOSCHA SMOLIC ET AL: "Coding Algorithms for 3DTV-A Survey", IEEE TRANSACTIONS ON CIRCUITS AND SYSTEMS FOR VIDEO TECHNOLOGY., vol. 17, no. 11, 1 November 2007 (2007-11-01), pages 1606-1621, XP055237666, US ISSN: 1051-8215, DOI: 10.1109/TCSVT.2007.909972 * page 1614, paragraph V - page 1616, paragraph V.D * | 1-11 | |

TECHNICAL FIELDS
SEARCHED      (IPC)

The present search report has been drawn up for all claims

| Place of search | Date of completion of the search | Examiner |
|---|---|---|
| Munich | 11 January 2016 | Zamuner, Umberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**EP 3 115 963 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2426636 A1

- EP 2835783 A1

**Non-patent literature cited in the description**

- **E. HALICI ; A. ALATAN.** Watermarking for depth-image-based rendering. *IEEE International Conference on Image Processing,* November 2009, 4217-4220
- Watermarking of free-view video. *IEEE Transactions on Image Processing,* July 2010, vol. 19 (7), 1785-1797

- Disparity Estimation and Disparity Coherent Watermarking. *Media Watermarking, Security and Forensics XVII,* February 2015, 940900
- **WALTER DRAZIC ; NEUS SABATER.** A Precise Real-time Stereo Algorithm. *Proceedings of the 27th Conference on Image and Vision Computing New Zealand,* November 2012, 138-143